# EUROPEAN PATENT SPECIFICATION

(11) **EP 1 656 325 B1**
(45) Date of publication and mention of the grant of the patent: **11.11.2009**
(21) Application number: 04780761.5
(22) Date of filing: 11.08.2004
(51) Int. Cl.: C01G 49/02, B01J 8/00, C01G 49/00, C02F 1/72

(54) **APPARATUS FOR SYNTHESIZING AN OXIDANT**
VORRICHTUNG ZUR SYNTHESE EINES OXIDATIONSMITTELS
APPAREIL DE SYNTHESE D'UN OXYDANT

(30) Priority: 21.08.2003 US 647137
(43) Date of publication of application: 17.05.2006
(73) Proprietor: Ferrate Treatment Technologies, LLC., Belle Isle FL 32809 (US)
(72) Inventor: POWELL, Duane, Alma, MI 48801 (US); DALY, Luke, J., Belle Isle, FL 32809 (US); CIAMPI, Lee, Edward, St. Paul, MN 55127 (US)
(74) Representative: Polypatent
(86) International application number: PCT/US2004/025978
(87) International publication number: WO 2005/021438

(56) References cited:
- WO-A-02/06160
- US-A1- 2002 121 482
- US-A1- 2002 155 044
- US-A1- 2003 146 169

## Description

### Field of the Invention

The present invention relates to an apparatus for the preparation of an oxidant in solution. More specifically, the present invention relates to an apparatus for the synthesis of ferrate.

### Description of the Related Art

Ferrate is a strong oxidant that can react with a variety of inorganic or organic reducing agents and substrates (R. L. Bartzatt, J. Carr, Trans. Met. Chem., Vol. 11 (11), pp. 414-416 (1986); T. J. Audette, J. Quail, and P. Smith, J. Tetr. Lett., Vol. 2, pp. 279-282 (1971); D. Darling, V. Kumari, and J. BeMiller, J. Tetr. Lett., Vol. 40, p. 4143 (1972); and R. K. Murmann and H. J. Goff, J. Am. Chem. Soc., Vol. 93, p. 6058-6065 (1971)). Ferrate can act as a selective oxidant for synthetic organic studies and is capable of oxidizing/removing a variety of organic and inorganic compounds from, and of destroying many contaminants in, aqueous and non-aqueous media.

Ferrate is of particular interest to water treatment because it provides a suitable mechanism for self-removal of ferrate from solution. In all oxidation reactions, the final iron product is the non-toxic ferric ion which forms hydroxide oligomers. Eventually flocculation and settling occur which remove suspended particulate matter.

The use of ferrate may therefore provide a safe, convenient, versatile and cost effective alternative to current approaches for water, wastewater, and sludge treatment. In this regard, ferrate is an environmentally friendly oxidant that represents a viable substitute for other oxidants, particularly chromate and chlorine, which are of environmental concern. Ferric oxide, typically known as rust, is the iron product of ferrate reduction. Therefore, ferrate has the distinction of being an "environmentally safe" oxidant. Although the oxidation reactions with ferrate appear similar to those known for MnO₄⁻ and CrO₄²⁻, ferrate exhibits greater functional group selectivity with higher rate of reactivity in its oxidations and generally reacts to produce a cleaner reaction products.

U.S. Patent Application Publication No. 2002/0155044A1, published October 24, 2002, and entitled "METHODS OF SYNTHESIZING AN OXIDANT AND APPLICATIONS THEREOF," describes a process by which ferrate is produced and methods of using ferrate. The Publication also describes generally devices that can be used for the synthesis of ferrate. However, there exists a need in the art for an efficient device for the synthesis of ferrate at a site proximal to the site of use.

### Summary of the Invention

Disclosed herein is a device for the preparation, and more specifically, the synthesis of ferrate. In one embodiment, the device comprises at least one container to hold starting materials; a measuring unit to measure an amount of said starting materials; a mixer to mix said measured amount of said starting materials; a reaction chamber, wherein said mixed starting materials react to produce ferrate; and a drain through which said ferrate may be obtained; wherein said drain is preferably located at a site proximal to the site of use of said ferrate; a temperature control unit as disclosed in claim 1.

### Brief Description of the Drawings

Figure 1 depicts a system in an embodiment of the device of the present invention by which feedstock reagents are introduced into the device of the present invention.

Figure 2 depicts a measuring chamber of an embodiment of the device of the present invention.

Figure 3 depicts an embodiment of a mixing chamber.

Figure 4 depicts an embodiment of the reaction chamber.

Figure 5 depicts an embodiment of the temperature control unit.

Figure 6 depicts an embodiment of the device of the present invention.

### Detailed Description of the Preferred Embodiment

A device for the synthesis of ferrate is disclosed. The device is capable of producing ferrate and may be optimized to perform the processes and methods set forth in the U.S. Patent Application Publication No. 2002/0155044A1, published October 24, 2002, and entitled "METHODS OF SYNTHESIZING AN OXIDANT AND APPLICATIONS THEREOF," which is hereby incorporated by reference herein in its entirety, including any drawings.

In certain embodiments, the disclosed device is located at a generation site, which is proximal to a site of use. As used herein, the terms "site of generation" or "generation site" refer to the site where the device for the generation of ferrate is located. In one embodiment exemplified herein, the generation site includes a reaction chamber for the generation of ferrate. The terms "site of use," "use site," or "treatment site" refer to the site where the ferrate is contacted with the object it is to oxidize, synthesize, disinfect, clean, plate, encapsulate, adsorb, coprecipitate, or coagulate.

The terms "close proximity" and "proximal" are generally used interchangeably herein. These terms are used to refer to the relative locations of the generation site and the use site. The two sites are proximal to each other when they are located when the two sites are within a distance that allows for the ferrate to travel the distance within a half-life of its decomposition. "Half-life" of a decomposition is understood to be the amount of time it takes for one half of the material present to undergo decomposition. The half-life for any given ferrate composition will depend on the conditions under which the ferrate is generated and/or stored. Thus, for example, the temperature, concentration of base, concentration of oxidizing agent, presence of impurities, or agitation will all tend to affect the half-life of the ferrate composition. However, the half-life can be readily measured by those having ordinary skill in the art using conventional techniques. Therefore, a generation site is "proximal" to a use site when the concentration of ferrate at the use site at the time of delivery is equal to or greater than one-half of the concentration of ferrate at the generation site. The distance between the generation site and the use site is defined in terms of the half-life and a length of time required for delivery, rather than simply in terms of physical displacement. Thus, the physical displacement between a generation site and use site that are in close proximity may vary depending on the half-life of the ferrate composition being delivered between the two sites and the rate at which the composition is delivered. Accordingly factors affecting both the rate of ferrate transfer and factors affecting the half-life will all affect the maximum physical displacement permissible for the two sites to remain in close proximity. Factors affecting the rate of ferrate transfer include, but are not limited to, the pressure generated by a pump used in the transfer, the temperature of the plumbing used in the transfer, and the size of the plumbing used in the transfer.

In certain embodiments, the disclosed device creates a reaction mixture comprising an iron salt and an oxidizing agent. "Iron salt" or "salt of iron" refers to a compound that comprises an iron atom in an oxidation state other than zero. The iron salt used by the methods of the present invention may be produced *in situ, i.e.,* by oxidizing elemental iron either chemically or electrochemically prior to its introduction into the mixing chamber or by performing the oxidation inside the mixing chamber. The iron atom in the iron salt will have an oxidation state greater than zero, preferably +2 or +3, though this oxidation state may be reached transiently as the iron atom is converted from its starting oxidation state to the final oxidation state of +4 or above.

In certain embodiments the iron salt is in an aqueous solution. However, embodiments of the invention include those in which the iron salt is dissolved in a solvent other than water. Preferably, the solvent dissolving the iron salt is one which does not undergo oxidation in the presence of the oxidizing agent or ferrate. In some embodiments, the iron salt is provided in solid, crystalline, or powder form and is dissolved in the solution comprising the oxidizing agent. In other embodiments, both the oxidizing agent and the iron salt are provided in solid, crystalline, or powder form and water, or other solvent, is added to the mixture thereof.

In certain embodiments, the iron salt may be selected from the group consisting of ferric nitrate, ferrous nitrate, ferric chloride, ferrous chloride, ferric bromide, ferrous bromide, ferric sulfate, ferrous sulfate, ferric phosphate, ferrous phosphate, ferric hydroxide, ferrous hydroxide, ferric oxides, ferrous oxides, ferric hydrogen carbonate, ferrous hydrogen carbonate, ferric carbonate, ferrous carbonate, and ferrous or ferric ion complexed with an organic compound, such as ethylenediaminetetraacetate (EDTA) or a polymer, or a combination thereof. All different forms of ferric and ferrous oxide are contemplated to be used with the methods of the present invention.

An "oxidizing agent" is a chemical compound that oxidizes another compound, and itself is reduced. In certain embodiments, the oxidizing agent comprises at least one of the following: a hypohalite ion, a halite ion, a halate ion, a perhalate ion, ozone, OXONE^{®}, halogen, a peroxide, a superoxide, a peracid, a salt of a peracid, and Caro's acid, or a combination thereof. Throughout the present specification, the term "OXONE^{®}" refers to potassium peroxymonopersulfate or potassium monopersulfate, or a mixture thereof.

Other embodiments include, but are not limited to, those in which the oxidizing agent comprises a hypohalite ion selected from the group consisting of the hypochlorite ion, the hypobromite ion, and the hypoiodite ion. In other embodiments of the invention, the oxidizing agent comprises a halite ion selected from the group consisting of the chlorite ion, the bromite ion, and the iodite ion. In yet other embodiments of the invention, the oxidizing agent comprises a halate ion selected from the group consisting of the chlorate ion, the bromate ion, and the iodate ion. Certain other embodiments of the invention include those in which the oxidizing agent comprises a perhalate ion selected from the group consisting of the perchlorate ion, the perbromate ion, and the periodate ion.

In certain embodiments, the method of producing ferrate further comprises adding a base to the mixture. The base may comprise a nitrogen base or an ion selected from the group consisting of hydroxide, oxide, sulfonate, sulfate, sulfite, hydrosulfide, phosphate, acetate, bicarbonate, and carbonate, or a combination thereof. "Nitrogen bases" are selected from acyclic and cyclic amines. Examples of nitrogen bases include, but are not limited to, ammonia, amide, methylamine, methylamide, trimethylamine, trimethylamide, triethylamine, triethylamide, aniline, pyrrolidine, piperidine, and pyridine, or salts thereof.

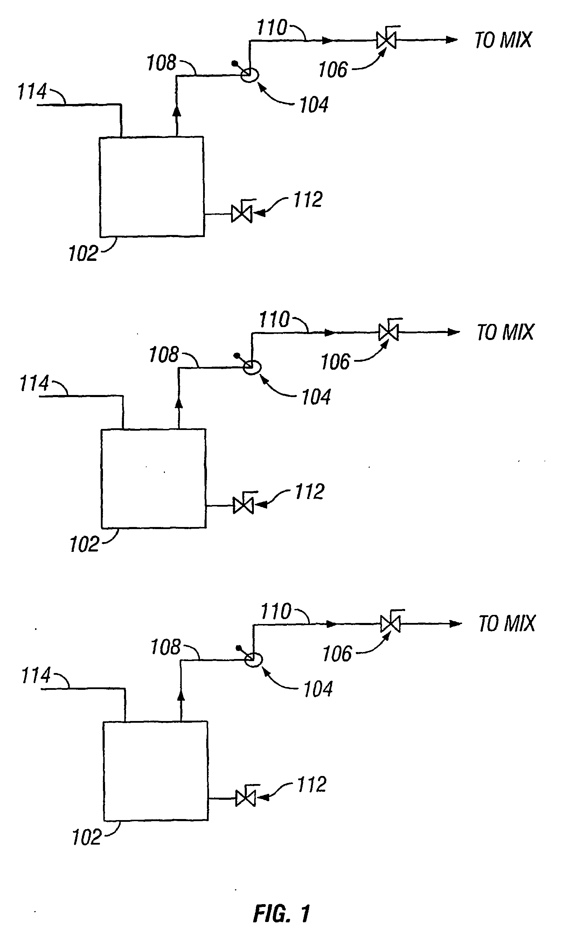

In accordance with one embodiment, Figure 1 shows the system by which feedstock reagents are introduced into the device of the present invention. There are provided a plurality of containers 102 for storing the feedstock to be used in the synthesis of ferrate. Figure 1 shows one embodiment of the invention in which three containers 102 are needed, one for each of the iron salt, the oxidizing agent, and the base. However, embodiments of the invention in which more than three or less than three containers 102 are used are also envisioned. For example, in some embodiments, no base is used and therefore only two containers 102 are needed. In other embodiments, the iron salt is added as a solid, and thus no container 102 for the iron salt is provided. Likewise, in some embodiments, additional reagents are used in the synthesis, and therefore, additional containers 102 are used.

Each container 102 is attached to a hose or a pipe 108. Throughout the present specification, "hose" and "pipe" are used interchangeably. A "hose" or a "pipe" is a conduit through which material, such as the starting material or the reaction mixture or the product, flow from one part of the device to another part of the device. Hoses or pipes of the device of the present invention may be flexible or rigid and may be made of many materials known in the art, such as metals, for example aluminum, steel, brass, or the like, or polymers, such as plastic, PVC, TYGON^{®}, or the like, or rubber.

Hose 108 connects to a pump 104, which pumps the reagent out of container 102 and into the device of the present invention. Pump 104 may be a manual pump or an automated pump. In some embodiments, pump 104 is equipped with a flowmeter, which is capable of measuring the volume of fluid passing through it. In further embodiments, pump 104 is equipped with an electronic signaling device, which can either display the volume of fluid passed through it, or send the volume information to a processor in a control portion of the device, as described below. A variety of automated and manual pumps are known in the art and may be used with the device of the present invention.

Hose 108 may be very short, such that pump 104 is attached to container 102. In these embodiments, hose 108 goes down into container 102 to remove the material contained therein. In other embodiments, hose 108 is several inches or feet long such that pump 104 is located a distance away from container 102. Thus, in some embodiments, several pumps 104 may be located within one location in the device, each being connected to a container 102 through a hose 108. In other embodiments, each pump 104 is attached directly to a container 102.

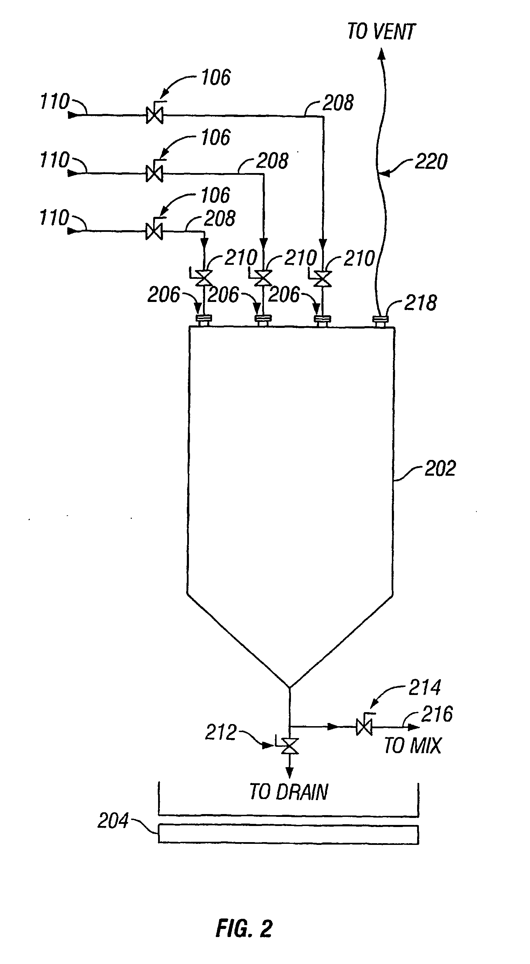

The fluid passing through pump 104 is delivered to the mixing chamber 202 (Figure 2) through a hose 110. In some embodiments, a valve 106 may control the flow of fluid through hose 110. In other embodiments, no valve 106 is present along the path between pump 104 and the mixing chamber 202.

Each container 102 may also be equipped with a hose 114 through which additional material could be introduced into container 102. Thus, in one embodiment in which the entirety of the device of the present invention is located inside of a box, the opening of hose 114 preferably protrudes out of the box to allow the operator of the device to add more starting material to each container 102 as the starting material is depleted through the use of the device.

Additionally, each container 102 may comprise a drain 112, which preferably facilitates removal of the material from container 102. Preferably, the material thus removed is not substantially introduced into the device. The drain 112 may have a valve, which may be operated manually or automatically.

Some embodiments of the present invention include those in which a measuring chamber is provided. The measuring chamber is depicted in Figure 2. In this embodiment, reagents are pumped out of containers 102 by pumps 104, flow through pipes 110 and optional valves 106, flow through pipes 208, and into a vessel 202. Vessel 202 may have a number of openings 206 to allow for the material to enter the vessel. Openings 206 may be at the top of vessel 202 or may be on the side of vessel 202. In some embodiments, openings 206 are at the bottom of vessel 202.

In some embodiments, vessel 202 may have another opening 218, which is connected through a pipe or an air duct 220 to the outside. The pipe or air duct 220 may be fitted with a fan. The purpose of the opening 218 and its associated pipe or duct 220 is to remove any noxious fumes or odors from vessel 202 and its vicinity.

In some embodiments, vessel 202 is located over a scale 204. As material is added to vessel 202, the scale 204 measures the weight of the material added. An operator may calculate how much starting material should be added for each particular synthesis based on various factors, including for example, the concentration of starting material. Scale 204 may have a display that indicates the weight of the material added. Scale 204 may also be directly or indirectly in electronic communication with pump 104, such that after a pre-determined weight of the starting has been delivered, pump 104 shuts off the flow of the starting material.

In still other embodiments, scale 204 may be in direct or indirect electronic communication with any of valves 106 or 210 to shut off the flow of starting material into vessel 202. In other embodiments, the reading of scale 204 is done manually and when the operator determines that sufficient amount of the starting material has been delivered to vessel 202 the operator manually stops the flow of material into vessel 202. Vessel 202 may also be fitted with a valve 212, which can be used to drain vessel 202 if more than the required amount of material was added to vessel 202. Once sufficient material has been delivered to vessel 202, the material is then transferred downstream in the device of the present invention for mixing.

In certain embodiments, when pump 104 is fitted with a flowmeter, there is no need for vessel 202 and scale 204. In these embodiments, the material flows directly from pump 104 through pipes 110 into the mixing or reaction chamber.

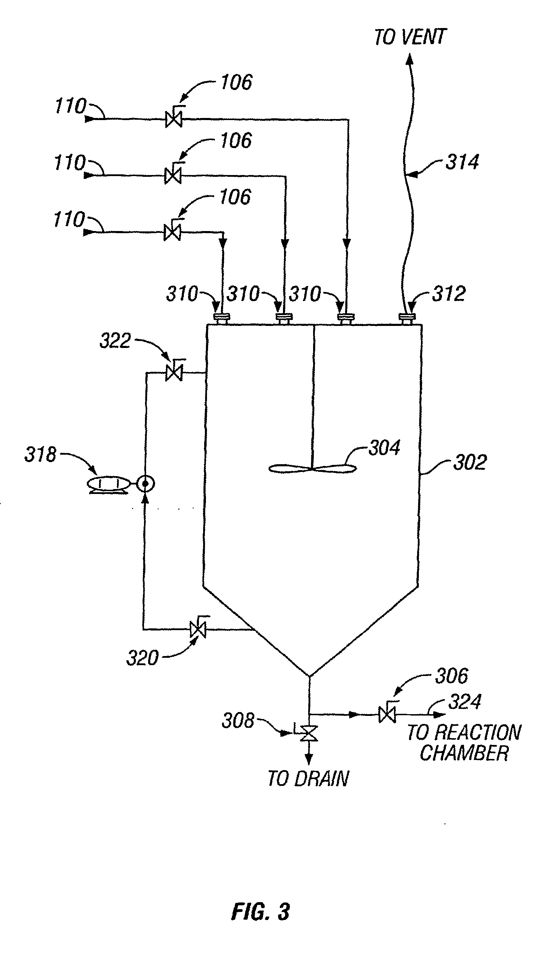

Figure 3 depicts an embodiment of a mixing chamber 302. The starting material flow into chamber 302 through pipes 110 and optional valves 106. Chamber 302 is fitted with a plurality of openings 310, the number of which depends on the number of starting reagents to be used. In some embodiments, chamber 302 may have a large number of openings 310 in order to provide the flexibility of adding as many reagents as is necessary. Any unused opening 310 may be closed off.

As was the case with vessel 202, in some embodiments, vessel 302 may have another opening 312, which is connected through a pipe or an air duct 314 to the outside. The pipe or air duct 314 may be fitted with a fan. The fan may be the same or a different fan than the one connected to the pipe or air duct 220. The purpose of the opening 312 and its associated pipe or duct 314 is to remove any noxious fumes or odors from vessel 302 and its vicinity.

Vessel 302 may also be fitted with a mixer 304. Mixer 304 may be a mechanical mixer that mixes the material within vessel 302 by rotation. In other embodiments, mixer 304 is an agitator. In other embodiments, mixer 304 is an eductor. In further embodiments, mixer 304 is a tank mixing eductor, a turbulent flow nozzle, a static mixer, a diffuser, a disperser, or a venturi tube. Mechanical mixers are well known in the art and any mechanical mixer is within the scope of the present invention. In other embodiments, there is no mixer 304. Instead, vessel 302 may be equipped with a pump 318, which removes material from vessel 302 at one point and reintroduces the material into vessel 302 at another point. There may be a valve upstream from pump 318, e.g., valve 320, or downstream from pump 318, e.g., valve 322, in order to better control the flow of fluid through the pump. Other modes of mixing are also contemplated.

In some embodiments, vessel 302 is fitted with a temperature control device. In one embodiment, the temperature control device is a jacket around vessel 302, through which a fluid, either liquid or gas, of a particular temperature flows and thereby heats or cools vessel 302 and the mixture contained therein. Other temperature adjustment devices currently known or later developed in the art are within the scope of the present invention.

Vessel 302 is fitted with a valve 308 through which the reaction mixture within vessel 302 may be discarded, if for any reason the reaction mixture is not needed. Otherwise, the reaction mixture can flow through pipe 324, which may optionally be fitted with a valve 306, into the reaction chamber.

As used herein, the term "reaction mixture" refers to a mixture obtained after the starting material for the synthesis of ferrate are mixed together.

In some embodiments, the device of the present invention does not have a mixing vessel 302. In these embodiments, the mixing chamber is a pipe. For example, pipes 110 come together to form pipe 324. The flow of material into pipe 324 causes the material to mix together. In some embodiments, the interior of pipe 324 may be fitted with materials that cause turbulence within pipe 324 in a greater degree that would occur in the absence of such materials. The added turbulence will cause the material within pipe 324 to mix together.

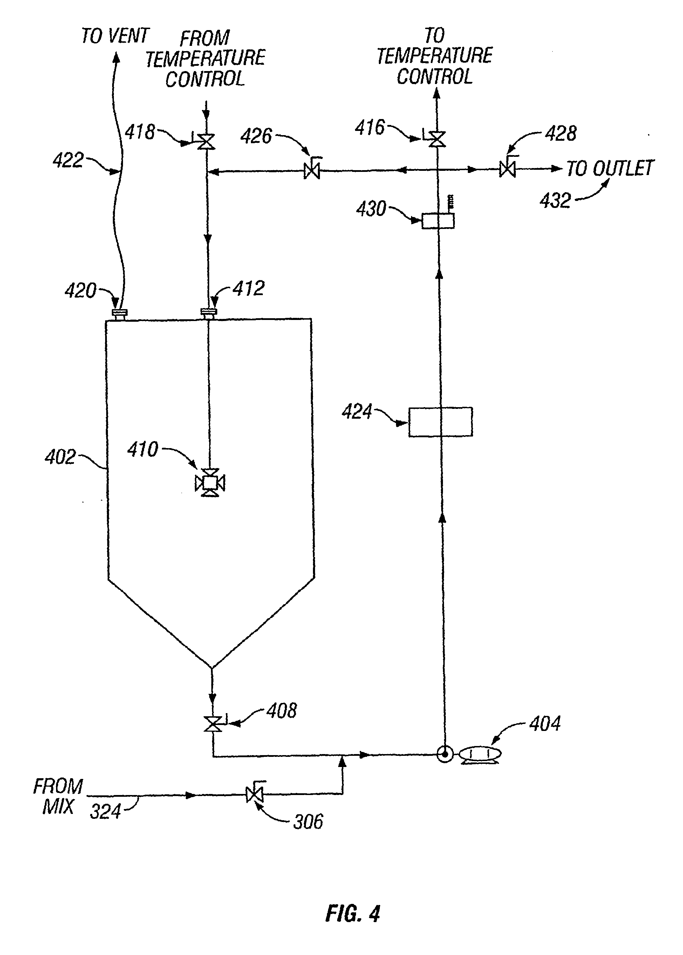

Figure 4 depicts one embodiment of the reaction chamber. The reaction mixture enters the reaction chamber through pipe 324 and optional valve 306. A pump 404 may be used in order to suck the reaction mixture into the reaction chamber. Once a sufficient quantity of the reaction mixture has entered the reaction chamber, valve 306 may be closed. Pump 404, then, circulates the reaction mixture through the reaction chamber.

The reaction chamber comprises a reaction vessel 402. Vessel 402 is fitted with a plurality of openings 412, the number of which depends on the particular configuration of the device and the need for such openings. Vessel 402 comprises at least one opening 412. Any unused opening 310 may be closed off.

As was the case with vessels 202 and 302, in some embodiments, vessel 402 may have another opening 420, which is connected through a pipe or an air duct 422 to the outside. The pipe or air duct 422 may be fitted with a fan. The fan may be the same or a different fan than the one connected to the pipe or air duct 220 or 314. The purpose of the opening 420 and its associated pipe or duct 422 is to remove any noxious fumes or odors from vessel 402 and its vicinity.

Vessel 402 may also be fitted with a mixer 410. Mixer 410 may be a mechanical mixer, as described above. Alternatively, vessel 402 may be fitted with a pump system analogous to pump 318 for mixing. In other embodiments, mixer 410 is an eductor, which causes the reaction mixture to mix as it passes therethrough.

In one embodiment, valves 306 and 426 are opened, while valves 416, 418, 428, and 408 remain closed. Once sufficient amount of the reaction mixture has entered vessel 402, valve 306 is closed and valve 408 is opened, while pump 404 is still functioning. Thus, the reaction mixture flows through valve 408, pump 404, valve 426 opening 412, eductor 410, and into vessel 402, and then repeats the cycle once again. This loop may be referred to as the reaction loop. In some embodiments, there is a bypass loop that connects upstream from opening 412 to downstream from valve 408. Once the bypass is employed, vessel 402 may be taken out of the reaction loop and the reaction loop may comprise a loop of pipes.

In one embodiment, the reaction chamber is fitted with a measuring device 424, which can measure the concentration of certain ingredients in the reaction mixture. The measurement may be to detect the concentration of ferrate produced, the concentration of the starting materials, or the concentration of impurities in the solution, at any given moment. The measuring device 424 may be located anywhere in the device, for example, along the reaction loop, in the reaction vessel, at drain 432, or anywhere else in the device.

The measurement may be automated or manual. In some embodiments, measuring device 424 may comprise a spectrophotometer. As the solution flows by the spectrophotometer, the instrument emits light of a particular wavelength that passes through a portion of the reaction mixture and is then detected by a detector. The detector then measures either the emittance or the absorbance of the solution at one or more particular wavelengths. These values are then compared to a known database. From that comparison, the concentration of a particular component within the solution can be calculated. The methods of calculating concentrations using a spectrophotometer are very well known in the art. The spectrophotometer may be an IR, Raman, UV, or visible spectrophotometer, or any other spectrophotometer known in the art.

In another embodiment, measuring device 424 may measure the oxidizing power of the solution as it flows through the device of the present invention. The oxidizing power may be measured, for example, chemically, as the solution reacts with a reducing agent, or electrochemically, as the solution is reduced by an electrical current.

The concentration of one or more components can also be measured manually. In these embodiments, the operator removes a portion of the circulating solution and measure the concentration of a particular component. The concentration of the component is measured using techniques well known in the art.

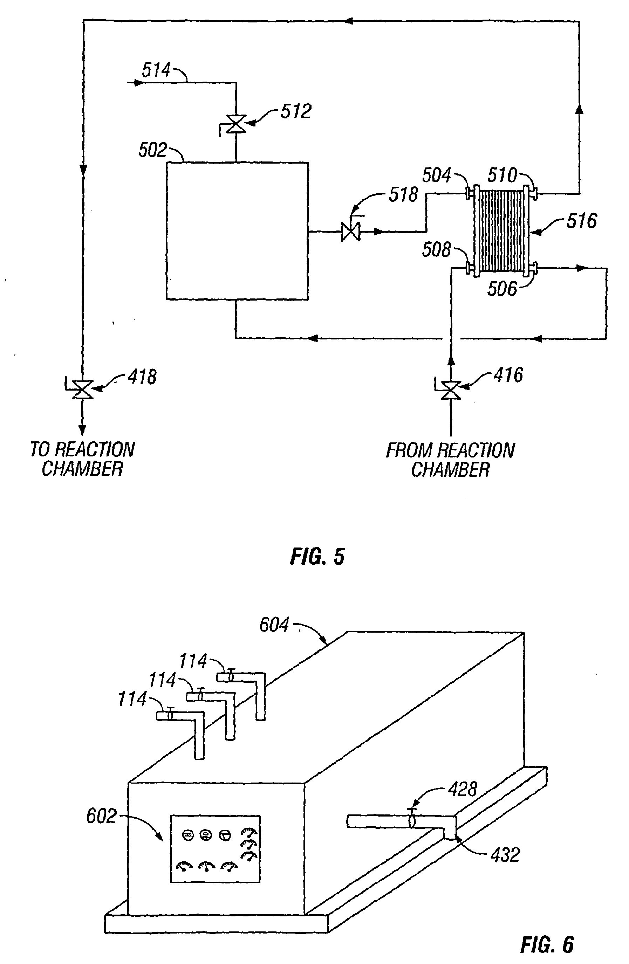

In certain embodiments, it is desirable to control the temperature of the reaction mixture. In these embodiments, valves 416 and 418 may be opened in order to loop the reaction mixture through a temperature control loop, depicted in Figure 5, during which the temperature of the mixture is either raised to a pre-determined value, lowered to a pre-determined value, or kept at a pre-determined value.

In other embodiments, the temperature adjustment device heats or cools the air around the pipe or hose through which the reaction mixture flows, thereby heating or cooling the reaction mixture. In yet other embodiments, the temperature adjustment device is a jacket around the reaction chamber or the mixing chamber, through which a fluid, either liquid or gas, of a particular temperature flows and thereby heats or cools the reaction mixture. Other temperature adjustment devices currently known or later developed in the art are within the scope of the present invention.

In one embodiment, shown in Figure 5, the temperature adjustment device may be a heat exchange device through which either cool or warm water circulates and thereby heats or cools the reaction mixture. When valves 416 and 418 are opened and valve 426 is closed, the temperature control unit becomes a part of the reaction loop. The reaction mixture flows through valve 416 and enters the heat exchange device 516 through the opening 508. There, depending on the temperature difference between the reaction mixture and the heat exchanger 516, the reaction mixture either heats up or cools down. The reaction mixture then exits the heat exchanger 516 through the opening 510 and flows through valve 418 to continue down the reaction loop.

In this embodiment, the temperature control unit also comprises a temperature adjuster 502, which can either cool or heat the fluid that flows through it. Water, air, or any other suitable fluid, enters the temperature adjuster 502 through pipe 514, once the valve 512 is opened. Once the temperature of the fluid inside the temperature adjuster 502 has reached a certain per-determined temperature, either by being cooled or warmed, the fluid is then directed to heat exchanger 516 through valve 518. The fluid enters heat exchanger 516 through opening 504 and then exits heat exchanger 516 through opening 506, whereupon it circulates back into heat adjuster 502.

In certain embodiments, the temperature of the reaction mixture is adjusted automatically. For example, the device may have a thermometer or thermocouple 430 along the reaction loop (see Figure 4). Thermometer 430 may be located anywhere along the reaction loop. The operator of the device can set the temperature to be at a desired setting. When the temperature of the reaction mixture is not at the desired setting, the thermometer 430 can send a signal by which valves 415 and 416 are opened and valve 426 is closed. The temperature adjuster 502 starts operating until such time that the temperature of the reaction mixture has reached the desired setting. At this point, either valves 415 and 416 are automatically closed and valve 426 opened, thereby removing the temperature control unit from the reaction loop, or the temperature control unit remains in the reaction loop in order to ensure that a constant temperature level is maintained throughout the operation.

In other embodiments, valves 415 and 416 and the portion of the reaction loop comprising valve 426 do not exist. In these embodiments the temperature control unit is a permanent and integral part of the reaction loop. In these embodiments, if the temperature adjustment is achieved automatically, thermometer 430 starts temperature adjuster 502 when such a need arises.

In other embodiments, the temperature may be adjusted manually, if desired. In these embodiments, the operator may monitor thermometer 430 and decide whether temperature is to be adjusted. When such a need arises, the operator may manually direct the reaction mixture through the temperature control unit whereby the temperature is adjusted. Once the desired temperature is reached, the operator may manually stop any further change in the temperature.

Once the concentration of ferrate within the reaction mixture, or the oxidizing power of the reaction mixture, has reached a suitable level, valve 428 is opened and at least a portion of the reaction mixture is drained from the reaction loop at opening 432 (Figures 4 and 6). Thus, opening 432 of the device of the present invention is at a site proximal to the site of use.

Figure 6 depicts an embodiment of the device of the present invention. In this embodiment, the device is contained within a box or a cage 604, primarily for aesthetic purposes, such that the various pipes and hoses and containers are left unseen. Protruding from container 604 are the feeding pipes 114 for each of containers 102. Also protruding from container 604 are valve 428 and drain 432 from which the final product is obtained.

Further, in this particular embodiment, the various drains described above, such as 112, 212, and 308, come together to form one main drain, which protrudes from container 604 (not shown in figure 6). Thus, if at any point during the operation of the device an unsuitable reaction mixture or starting material is to be discarded, the operator can do so without contaminating drain 432., In other embodiments, when contamination is not a concern, the discard drains mentioned herein feed into drain 432, such that there is only one drain out of container 604.

As described above, some of the embodiments of the present invention relate to those in which the operation of the device of the present invention takes place automatically. For these embodiments, a control panel 602 is provided on the outside of container 604. Control panel 602 provides a means by which the operator inputs data for a control portion and receives data from the control portion. The control portion is where the automated aspects of the device are processed.

Through various input devices on control panel 602, the operator can control certain parameters. For example, the operator can determine the amount of each of the starting materials to be used for a synthesis, the length of time the reaction mixture is to circulate in the reaction loop or sit in the reaction chamber, the final concentration of ferrate or the final oxidizing power of the reaction mixture prior to drainage, the temperature of the reaction mixture, or any other parameter that needs to be, or can be, controlled for the synthesis. The operator can also input the synthesis rate for ferrate. For example, based on a specific need, the operator can determine whether ferrate is to be synthesized continuously or in batches. If ferrate is to be synthesized continuously, the operator can determine the rate at which ferrate is obtained at drain 432. If ferrate is to be synthesized in batches, the operator can determine the number of batches and/or the time interval between the synthesis of each batch.

In some embodiments, separate control portions may be provided. Thus, a first control portion may control the mixing process, while a second control portion may control the reaction process. In some embodiments, the separate control portions may be in communication with one another.

In some embodiments, a separate control portion may be provided for each of the flow rate, temperature, pressure, and volume aspects of the production system. In some embodiments, each of the separate control portion are in communication with one another to control the entire system.

The control portion can be manipulated through a variety of different user interfaces. The user interfaces can be a monitor, personal digital assistant (PDA) and the like. The user interface can be connected to the production system by wire, wireless communication, local area network (LAN), wide area network, a telephone connection, the Internet, modems, routers, and the like.

The control portion may include at least one processor for receiving data and outputting commands. The control portion may include software and hardware. The control system may include A/D converters and D/A converters. The control portion may include data acquisition.

The control portion may be pre-programmed to produce a desired result. In one embodiment, a user may input into the system the desired properties of the output, and the control potion controls the system components to produce the desired result. Alternatively, the user may input the quantities of solution components and temperatures to produce different outputs.

As described above, the mixing portion and reaction portion may include sensors and valves. In some embodiments, the sensors and valves communicate with the control portion to produce a final product having certain desirable properties. In some embodiments, the sensor and valves may be pneumatic to control the system mechanically. In some embodiments, the sensors and valves may be electric. In some embodiments, the system may include combinations of pneumatic and electric sensors and valves.

If more than one control portion is employed, each control portion may have a separate control panel 602. In other embodiments, the various input/output devices for the several control portions are contained within one control panel 602.

In certain embodiments, the device of the present invention receives information about the state of the product that is being oxidized, for example, the effluent stream in a water treatment plant. The information may be inputted into the device manually by an operator, or automatically through sensors in the product stream. In either case, it is determined whether the product stream is being sufficiently affected by ferrate or not. If more ferrate is needed, that information is conveyed to the device of the present invention and more ferrate is produced. If too much ferrate is being introduced into the product stream, then the device of the present invention is made to produce less ferrate, or to cease production of ferrate.

By "product stream" it is meant the substance which contains the object to be oxidized, synthesized, disinfected, cleaned, plated, encapsulated, adsorbed, coprecipitated, or coagulated.

In some embodiments, two separate sensors determine the amount of ferrate needed for the particular product stream. One sensor may be located upstream from where ferrate is contacted with the product stream. Thus, for example, the upstream sensor may be located where the influent stream enters the site of use or upstream thereof. The upstream sensor determines the amount of ferrate needed for the particular conditions of the product stream.

Another sensor may be located downstream from where ferrate is contacted with the product stream. Thus, for example, the downstream sensor may be located in the site of use or where the effluent stream exits the site of use, or downstream thereof. The downstream sensor determines whether the amount of ferrate introduced into the product stream was sufficient or not.

In some embodiments, only one sensor is present, i.e., either the upstream or the downstream sensor. In other embodiments, there is no sensor.

In some embodiments, the sensor is operated manually, for example, by an operator conducting a visual or chemical test of the product stream. In other embodiments, the sensor is operated automatically.

In another aspect, the present invention relates to a device for the synthesis of ferrate, comprising at least one container capable of holding starting materials; means for measuring an amount of the starting materials; means for mixing the starting materials; a reaction chamber; and a drain; where the drain is located at a site proximal to the site of use of the ferrate.

In yet another aspect, the present invention relates to a device for the synthesis of ferrate, comprising means for holding starting materials; means for measuring an amount of the starting materials; means for mixing the starting materials; means for reacting the starting materials to produce the ferrate; and means for removing the ferrate from the device; where the means for removing is located at a site proximal to the site of use of the ferrate.

In some embodiments, "means for holding starting materials" includes, but is not limited to, a hopper, tank car, vessel, tank, pipe systems, drum, bucket, bag, or reservoir.

In certain embodiments, "means for measuring an amount of the starting materials" includes, but is not limited to, a pressure sensor, volume sensor, graduated container, weight scale, optical concentration sensor, mass flow meter, or volume flow meter.

In some embodiments, "means for mixing the starting materials", includes, but is not limited to, a rotor-stator, paddle, blade, agitator, disperser, stationary plate, stationary helix, turbine, pump, jet mixer, mixing valve, impeller, baffle, eductor, tank mixing eductor, turbulent flow nozzle, static mixer, diffuser, disperser, or venturi tube.

In certain embodiments, "means for reacting the starting materials" includes, but is not limited to, a reaction vessel, which may include a hopper, tank car, vessel, tank, pipe systems, drum, bucket, bag, or reservoir, which in turn may comprise an evaporator, heat exchanger, compressor, condenser, cooling coil, heating coil, or boiler.

In some embodiments, "means for removing the ferrate from the device" includes, but is not limited to, a pipe system, valve, tank, vessel, reservoir, bucket, pump, or drain.

The foregoing description details certain embodiments of the invention. It will be appreciated, however, that no matter how detailed the foregoing appears in text, the invention can be practiced in many ways. As is also stated above, it should be noted that the use of particular terminology when describing certain features or aspects of the invention should not be taken to imply that the terminology is being re-defined herein to be restricted to including any specific characteristics of the features or aspects of the invention with which that terminology is associated. The invention should therefore be construed in accordance with the appended claims and any equivalents thereof.

Other embodiments are within the following claims.

## Claims

1. A device for the synthesis of ferrate, comprising
at least one container capable of holding starting materials;
a measuring unit capable of measuring an amount of said starting materials;
a mixer capable of mixing starting materials;
a reaction chamber;
a temperature control unit connected to said reaction chamber through a valve wherein said ferrate flows through said temperature control unit when said valve is open, but said ferrate does not flow through said temperature control unit when said valve is closed; and
a drain;
wherein said drain is located at a site proximal to the site of use of said ferrate.

2. The device of claim 1, wherein said at least one container comprises three containers.

3. The device of claim 1, wherein said at least one container comprises at least one container suitable for holding an iron salt, at least one container suitable for holding an oxidizing agent, and at least one container suitable for holding a base.

4. The device of claim 3, wherein said at least one container suitable for holding an iron salt is suitable for holding an iron salt selected from the group consisting of ferric nitrate, ferrous nitrate, ferric chloride, ferrous chloride, ferric bromide, ferrous bromide, ferric sulfate, ferrous sulfate, ferric phosphate, ferrous phosphate, ferric hydroxide, ferrous hydroxide, ferric oxides, ferrous oxides, ferric hydrogen carbonate, ferrous hydrogen carbonate, ferric carbonate, and ferrous carbonate.

5. The device of claim 3, wherein said at least one container suitable for holding an iron salt is suitable for holding ferric chloride.

6. The device of claim 3, wherein said at least one container suitable for holding an oxidizing agent is suitable for holding an oxidizing agent selected from the group consisting of a hypohalite ion, a halite ion, a halate ion, a perhalate ion, ozone, potassium peroxymonopersulfate, potassium monopersulfate, halogen, a peroxide, a superoxide, a peracid, a salt of a peracid, and Caro's acid.

7. The device of claim 3, wherein said at least one container suitable for holding an oxidizing agent is suitable for holding a hypochlorite ion.

8. The device of claim 3, wherein said at least one container suitable for holding a base is suitable for holding a base selected from the group consisting of hydroxide, oxide, sulfonate, sulfate, sulfite, hydrosulfide, phosphate, acetate, bicarbonate, and carbonate.

9. The device of claim 3, wherein said at least one container suitable for holding a base is suitable for holding sodium hydroxide.

10. The device of claim 1, wherein said measuring unit comprises a flowmeter.

11. The device of claim 1, wherein said measuring unit comprises a scale by which the weight of each starting material is measured prior to its introduction into said reaction chamber.

12. The device of claim 1, wherein said mixer comprises at least one eductor.

13. The device of claim 1, wherein said mixer comprises at least one mechanical mixer.

14. The device of claim 1, wherein said reaction chamber comprises a reaction vessel and a reaction loop.

15. The device of claim 1, further comprising a concentration measuring unit in said reaction chamber.

16. The device of claim 15, wherein said concentration measuring unit is a spectrophotometer.

17. The device of claim 1, further comprising a temperature adjuster.

18. The device of claim 1, wherein said temperature control unit comprises a heat exchanger.

19. The device of claim 1, further comprising a second valve connecting said temperature control unit to said reaction chamber.

## Patentansprüche

1. Eine Vorrichtung für die Synthese von Ferrat, umfassend:
- wenigstens einen Behälter, der in der Lage ist, Ausgangsmaterialien aufzunehmen,
- eine Messeinheit, die in der Lage ist, eine Menge dieser Ausgangsmaterialien zu messen,
- einen Mischer, der in der Lage ist, die Ausgangsmaterialien zu mischen,
- eine Reaktionskammer,
- eine Temperaturreglungseinheit, die mit dieser Reaktionskammer über ein Ventil verbunden ist, wobei dieses Ferrat durch diese Temperaturreglungseinheit fließt, wenn das Ventil geöffnet ist, das Ferrat aber nicht durch diese Temperaturreglungseinheit fließt, wenn dieses Ventil geschlossen ist, und
- einen Ablauf, wobei dieser Ablauf an einer Stelle in der Nähe der Stelle der Verwendung dieses Ferrats angeordnet ist.

2. Vorrichtung nach Anspruch 1, wobei dieser wenigstens eine Behälter drei Behälter umfasst.

3. Vorrichtung nach Anspruch 1, wobei dieser wenigstens eine Behälter wenigstens einen Behälter, der zur Aufnahme eines Eisensalzes geeignet ist, wenigstens einen Behälter, der zur Aufnahme eines Oxidierungsmittels geeignet ist, und wenigstens einen Behälter, der zur Aufnahme einer Base geeignet ist, umfasst.

4. Vorrichtung nach Anspruch 3, wobei dieser wenigstens eine Behälter, der zur Aufnahme des Eisensalzes geeignet ist, zur Aufnahme eines Eisensalzes, ausgewählt aus der Gruppe bestehend aus Eisen(III)-nitrat, Eisen(II)-nitrat, Eisen(III)-chlorid, Eisen(II)-chlorid, Eisen(III)-bromid, Eisen(II)-bromid, Eisen(III)-sulfat, Eisen(II)-sulfat, Eisen(III)-phosphat, Eisen(II)-phosphat, Eisen(III)-hydroxid, Eisen(II)-hydroxid, Eisen(III)-oxiden, Eisen(II)-oxiden, Eisen(III)-hydrogencarbonat, Eisen(II)-hydrogencarbonat, Eisen(III)-carbonat und Eisen(II)-carbonat, geeignet ist.

5. Vorrichtung nach Anspruch 3, wobei dieser wenigstens eine Behälter, der zur Aufnahme eines Eisensalzes geeignet ist, zur Aufnahme von Eisen(III)-chlorid geeignet ist.

6. Vorrichtung nach Anspruch 3, wobei dieser wenigstens eine Behälter, der zur Aufnahme eines Oxidationsmittels geeignet ist, zur Aufnahme eines Oxidationsmittels, ausgewählt aus der Gruppe bestehend aus einem Hypohalogenition, einem Halogenition, einem Halogenation, einem Perhalogenation, Ozon, Kaliumperoxymonopersulfat, Kaliummonopersulfat, Halogen, einem Peroxid, einem Superoxid, einer Persäure, einem Salz einer Persäure und Caroscher Säure, geeignet ist.

7. Vorrichtung nach Anspruch 3, wobei dieser wenigstens eine Behälter, der zur Aufnahme eines Oxidationsmittels geeignet ist, zur Aufnahme eines Hypochloritions geeignet ist.

8. Vorrichtung nach Anspruch 3, wobei dieser wenigstens eine Behälter, der zur Aufnahme einer Base geeignet ist, zur Aufnahme einer Base, ausgewählt aus der Gruppe bestehend aus Hydroxid, Oxid, Sulfonat, Sulfat, Sulfit, Hydrosulfid, Phosphat, Acetat, Bicarbonat und Carbonat, geeignet ist.

9. Vorrichtung nach Anspruch 3, wobei dieser wenigstens eine Behälter, der zur Aufnahme einer Base geeignet ist, zur Aufnahme von Natriumhydroxid geeignet ist.

10. Vorrichtung nach Anspruch 1, wobei diese Messeinheit einen Durchflussmesser aufweist.

11. Vorrichtung nach Anspruch 1, wobei diese Messeinheit eine Waage aufweist, mit der das Gewicht jedes Ausgangsmaterials vor dem Einbringen in die Reaktionskammer gemessen wird.

12. Vorrichtung nach Anspruch 1, wobei dieser Mischer wenigstens eine Evektordüse aufweist.

13. Vorrichtung nach Anspruch 1, wobei dieser Mischer wenigstens einen mechanischen Mischer umfasst.

14. Vorrichtung nach Anspruch 1, wobei diese Reaktionskammer ein Reaktionsgefäß und eine Reaktionsschleife umfasst.

15. Vorrichtung nach Anspruch 1, die zusätzlich eine Konzentrationsmesseinheit in dieser Reaktionskammer aufweist.

16. Vorrichtung nach Anspruch 15, wobei diese Konzentrationsmesseinheit ein Spektrophotometer ist.

17. Vorrichtung nach Anspruch 1, die zusätzlich eine Temperatureinstellvorrichtung aufweist.

18. Vorrichtung nach Anspruch 1, wobei diese Temperaturreglungseinheit einen Wärmetauscher aufweist.

19. Vorrichtung nach Anspruch 1, die zusätzlich ein zweites Ventil aufweist, das diese Temperaturreglungseinheit mit dieser Reaktionskammer verbindet.

## Revendications

1. Dispositif pour la synthèse de ferrate, comprenant :
au moins un récipient capable de contenir les matériaux de départ ;
une unité de mesure capable de mesurer une quantité desdits matériaux de départ ;
un mélangeur capable de mélanger les matériaux de départ ;
une chambre de réaction ;
une unité de contrôle de température connectée à ladite chambre de réaction à travers une soupape, dans laquelle ledit ferrate s'écoule à travers ladite unité de contrôle de température quand ladite soupape est ouverte, mais ledit ferrate ne s'écoule pas à travers ladite unité de contrôle de température quand ladite soupape est fermée ; et
une vidange ;
où ladite vidange est située à un endroit proche du site d'utilisation dudit ferrate.

2. Dispositif selon la revendication 1, dans lequel ledit au moins un récipient comprend trois récipients.

3. Dispositif selon la revendication 1, dans lequel ledit au moins un récipient comprend au moins un récipient adapté pour contenir un sel de fer, au moins un récipient adapté pour contenir un agent oxydant, et au moins un récipient adapté pour contenir une base.

4. Dispositif selon la revendication 3, dans lequel ledit au moins un récipient adapté pour contenir un sel de fer est adapté pour contenir un sel de fer choisi dans le groupe constitué de nitrate ferrique, nitrate ferreux, chlorure ferrique, chlorure ferreux, bromure ferrique, bromure ferreux, sulfate ferrique, sulfate ferreux, phosphate ferrique, phosphate ferreux, hydroxyde ferrique, hydroxyde ferreux, oxydes ferriques, oxydes ferreux, carbonate d'hydrogène ferrique, carbonate d'hydrogène ferreux, carbonate ferrique, et carbonate ferreux.

5. Dispositif selon la revendication 3, dans lequel ledit au moins un récipient adapté pour contenir un sel de fer est adapté pour contenir du chlorure ferrique.

6. Dispositif selon la revendication 3, dans lequel ledit au moins un récipient adapté pour contenir un agent oxydant est adapté pour contenir un agent oxydant choisi dans le groupe constitué d'un ion hypohalite, un ion halite, un ion halate, un ion perhalate, de l'ozone, du peroxymonopersulfate de potassium, du monopersulfate de potassium, un halogène, un peroxyde, un superoxyde, un peracide, un sel d'un peracide, et un acide de Caro.

7. Dispositif selon la revendication 3, dans lequel ledit au moins un récipient adapté pour contenir un agent oxydant est adapté pour contenir un ion hypochlorite.

8. Dispositif selon la revendication 3, dans lequel ledit au moins un récipient adapté pour contenir une base est adapté pour contenir une base choisie dans le groupe constitué d'hydroxyde, d'oxyde, de sulfonate, de sulfate, de sulfite, d'hydrosulfure, de phosphate, d'acétate, de bicarbonate, et de carbonate.

9. Dispositif selon la revendication 3, dans lequel ledit au moins un récipient adapté pour contenir une base est adapté pour contenir de l'hydroxyde de sodium.

10. Dispositif selon la revendication 1, dans lequel ladite unité de mesure comprend un débitmètre.

11. Dispositif selon la revendication 1, dans lequel ladite unité de mesure comprend une échelle par laquelle le poids de chaque matériau de départ est mesuré avant son introduction dans ladite chambre de réaction.

12. Dispositif selon la revendication 1, dans lequel ledit mélangeur comprend au moins un plongeur.

13. Dispositif selon la revendication 1, dans lequel ledit mélangeur comprend au moins un mélangeur mécanique.

14. Dispositif selon la revendication 1, dans lequel ladite chambre de réaction comprend un récipient de réaction et une boucle de réaction.

15. Dispositif selon la revendication 1, comprenant en outre une unité de mesure de la concentration dans ladite chambre de réaction.

16. Dispositif selon la revendication 15, dans lequel ladite unité de mesure de la concentration est un spectrophotomètre.

17. Dispositif selon la revendication 1, comprenant en outre un ajusteur de température.

18. Dispositif selon la revendication 1, dans lequel ladite unité de contrôle de température comprend un échangeur thermique.

19. Dispositif selon la revendication 1, comprenant en outre une seconde soupape connectant ladite unité de contrôle de température à ladite chambre de réaction.
